(19) **Europäisches Patentamt**
**European Patent Office**
**Office européen des brevets**

(11) **EP 4 560 259 B1**

(12) **EUROPÄISCHE PATENTSCHRIFT**

(45) Veröffentlichungstag und Bekanntmachung des Hinweises auf die Patenterteilung:
**25.03.2026 Patentblatt 2026/13**

(21) Anmeldenummer: **24215010.0**

(22) Anmeldetag: **25.11.2024**

(51) Internationale Patentklassifikation (IPC):
**G01B 11/16** (2006.01) **G01M 17/02** (2006.01)

(52) Gemeinsame Patentklassifikation (CPC):
**G01M 17/027; G01B 11/162**

(54) **VORRICHTUNG UND VERFAHREN ZUM PRÜFEN EINES REIFENS, INSBESONDERE MITTELS EINES INTERFEROMETRISCHEN MESSVERFAHRENS**

DEVICE AND METHOD FOR TESTING A TYRE, IN PARTICULAR BY MEANS OF AN INTERFEROMETRIC MEASURING METHOD

DISPOSITIF ET PROCÉDÉ DE CONTRÔLE D'UN PNEUMATIQUE, EN PARTICULIER AU MOYEN D'UN PROCÉDÉ DE MESURE INTERFÉROMÉTRIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **23.11.2023 DE 102023132675**

(43) Veröffentlichungstag der Anmeldung:
**28.05.2025 Patentblatt 2025/22**

(73) Patentinhaber:
• **Dengler, Stefan**
**75365 Calw-Stammheim (DE)**
• **Mähner, Bernward**
**82284 Grafrath (DE)**

(72) Erfinder:
• **Dengler, Stefan**
**75365 Calw-Stammheim (DE)**
• **Mähner, Bernward**
**82284 Grafrath (DE)**

(74) Vertreter: **Flügel Preissner Schober Seidel**
**Patentanwälte PartG mbB**
**Nymphenburger Straße 20**
**80335 München (DE)**

(56) Entgegenhaltungen:
**EP-B1- 1 959 227** **EP-B1- 2 851 670**
**DE-B3- 102022 115 800**

**Beschreibung**

Die Erfindung betrifft eine Vorrichtung und ein Verfahren zum Prüfen eines Reifens, insbesondere mittels eines interferometrischen Messverfahrens.

Ein Reifen ist ein rotationssymmetrisches Bauteil, insofern ist die erfindungsgemäße Vorrichtung auch dazu geeignet, andere rotationssymmetrische Bauteile zu prüfen. Das Messverfahren, mit dem die Reifen geprüft werden, ist insbesondere ein interferometrisches, vorzugsweise ein sogenanntes shearographisches, Messverfahren.

In der industriellen Praxis sind bei der zerstörungsfreien Prüfung von Reifen häufig optische Messverfahren anzutreffen, wie zum Beispiel die Holographie oder die auch als Speckle-Pattern-Shearing-Interferometrie bezeichnete Shearographie. Die Shearographie ist ein relatives interferometrisches Messverfahren, das ein Ergebnisbild liefert, welches den Unterschied zwischen zwei zeitlich versetzten Zuständen des Prüfobjekts darstellt. Um die unterschiedlichen Zustände zwischen zwei Messungen zu erzeugen, wird das Prüfobjekt in einen geänderten Zustand gebracht, indem eine mechanische, thermische oder pneumatischen Kraft auf das Prüfobjekt ausgeübt wird. Bekannte Vorrichtungen weisen aus diesem Grund eine Druckkammer auf, die entweder evakuiert oder mit Druck beaufschlagt wird, so dass sich das in der Druckkammer befindende Prüfobjekt infolge der Druckänderung verformt. Hierbei geht das Prüfobjekt von einem ersten Referenzzustand in einen zweiten Messzustand über.

Aufgrund der Aufnahmen des Prüfobjekts in zwei verschiedenen Zuständen kann mittels des relativen interferometrischen Messverfahrens der Gradient der Verformung ermittelt werden. Das den Gradienten der Verformung kennzeichnende Shearogramm wird durch Subtraktion der Intensitäten der im Referenzzustand und im Messzustand gewonnenen Interferogramme erzeugt. Das Shearogramm gibt zu erkennen, ob sich die Lage eines Punktes zu einem benachbarten Punkt auf Grund der Verformung des Prüfobjekts geändert hat. Falls ja, dann führt dieser Wegunterschied zu einer lokalen Veränderung der Intensitätsverteilung, die Auskunft über eine Fehlstelle gibt. Interferometrische Messverfahren, die auf dieser Speckle-Interferomertrie beruhen, sind beispielsweise aus DE 42 31 578 A1 und EP 1 014 036 B1 bekannt.

Aufgrund des aufwendigen Messverfahrens ist die Dauer eines Prüfzyklus relativ lang, da die Druckkammer mehrmals mit Druck beaufschlagt werden muss. Ein Prüfzyklus umfasst hierbei zumindest zwei Messungen, die jeweils zu einem unterschiedlichen Umgebungsdruck durchgeführt werden. Diese Messungen müssen mehrmals wiederholte werden, da der von einem Sensor erfasste Bereich nur einen Teilbereich des Prüfobjekts abdecken kann. Entsprechend ist hierzu beispielsweis aus EP 1 959 227 B1 eine Vorrichtung bekannt, die den Reifen abschnittsweise mittels eines Messkopfs in einem Prüfzyklus erfasst. Damit der Reifen vollständig erfasst werden kann, muss der Reifen allerdings intermittierend gedreht und die Druckkammer dabei mehrmals evakuiert werden.

Um die Zykluszeit einer Prüfanlage zu reduzieren, werden bei bekannten Maschinen mehr Messsysteme/Kameras verwendet, um mehr Sektoren bzw. Reifenabschnitte gleichzeitig zu erfassen. Eine derartige Vorrichtung ist beispielsweise aus EP 2 549 258 B1 und DE 10 2013 010 402 A1 bekannt. Die Messsysteme sind allerdings teuer und darüber hinaus sehr empfindlich, sodass die Messsysteme mit einem hohen Wartungsaufwand gepflegt werden müssen. Weiterhin sind die Lichtquellen (z.B. Laserdioden) und Optiken derartiger Messköpfe von Verschleiß betroffen, sodass eine möglichst geringe Anzahl an Messköpfen erstrebenswert ist.

Mit der fortschreitenden Entwicklung neuer hochempfindlicher digitalen Kameras, die einen sogenannten CMOS-Sensor aufweisen, können gegenüber früheren Kamerasystemen mit einem sogenannten CCD-Sensor größere Gesichtsfelder ohne einen Verlust an Bildqualität erfasst werden.

An sich kann durch ein größeres Gesichtsfeld die Anzahl der zu prüfenden Sektoren reduziert werden, wodurch sich auch die Dauer der gesamten Prüfung reduziert, ohne die Anzahl der Messsysteme zu erhöhen. Jedoch ist trotz des technisch größeren Gesichtsfelds der maximale zu erfassende Bereich durch den Abstand zu der zu erfassenden Oberfläche meist limitiert. Denn gerade um in dem inneren eines Reifens eine Messung durchführen zu können muss der kürzere verfügbare Abstand durch eine kürze Brennweite kompensiert werden. Jedoch verzerrt sich bei einer kürzen Brennweite das erfasste Bild im Randbereich besonders stark, wodurch sich der Randbereich nur eingeschränkt zum Prüfen eines Reifens mittels eines interferometrischen Messverfahrens eignet.

In EP 2 851 670 A2 wird ein Reifenprüfgerät zur optischen Prüfung eines Reifens beschrieben, das eine Auflagefläche für den zu prüfenden Reifen, mehrere Messköpfe, die jeweils eine Messoptik aufweisen und die zum Prüfen der inneren Lauffläche und/oder der äußeren Seitenfläche des Reifens dienen, und eine Positioniereinrichtung, die zum Positionieren der Messköpfe in einer Ruheposition und in einer Messposition dienen, aufweist. Die Messköpfe und die Auflagefläche sind drehfest angeordnet.

Weiterhin offenbart DE 10 2022 115 800 B3 ein Verfahren zum Prüfen eines Reifens mittels einer Prüfvorrichtung, die eine Prüfkammer, Messköpfe und eine Positioniervorrichtung aufweist. Das Verfahren umfasst die folgenden Verfahrensschritte: a) der Reifen wird in der Prüfvorrichtung angeordnet; b) der Reifen wird in einem ersten Prüfdurchlauf mittels eines interferometrischen Prüfverfahrens geprüft, ohne dass die Messköpfe und der Reifen eine Relativbewegung um die Rollachse des Reifens während einem ersten Prüfdurchlauf erfahren; c) der Reifen wird nach dem ersten Prüfdurchlauf in der Positioniervorrichtung angeordnet und um eine senkrecht zu der Rollachse stehende Rotationsachse um 180° rotiert und um die Rollachse um einem vorbestimmten Drehwinkel ($\alpha$) gedreht; d) der Reifen wird in der Prüfvorrichtung angeordnet; e) der Reifen wird in einem zweiten Prüfdurchlauf mittels eines interferometrischen Prüfverfahrens geprüft, ohne dass die Messköpfe und der Reifen eine Relativbewegung um die Rollachse des Reifens während dem zweiten Prüfdurchlauf erfahren.

Der Erfindung liegt die Aufgabe zugrunde, eine Vorrichtung zum Prüfen von Reifen, insbesondere mittels eines interferometrischen Messverfahrens, und ein entsprechendes Verfahren zu schaffen, durch die sich eine relativ kurze Prüfdauer erzielen lassen.

Diese Aufgabe wird durch eine Vorrichtung nach Anspruch 1 und ein Verfahren nach Anspruch 13 gelöst.

Bevorzugte Ausgestaltungen der Vorrichtung sind Gegenstand der Ansprüche 2 bis 12, und vorteilhafte Ausgestaltungen des Verfahrens sind Gegenstand der Ansprüche 14 und 15.

Die erfindungsgemäße Vorrichtung zum Prüfen eines Reifens mittels eines interferometrischen Messverfahrens umfasst eine Druckkammer, ein Untergestell, eine Messvorrichtung mit N außenliegende Messköpfe und N innenliegende Messköpfe sowie eine Drehvorrichtung.

Der Reifen hat eine erste Seitenwand, eine zweite Seitenwand und eine Lauffläche. Die erste Seitenwand und/oder die zweite Seitenwand sind in eine Vielzahl an zu erfassende Sektoren unterteilbar. Die Sektoren der ersten Seitenwand sind von einer ersten Sektorlinie und einer zweiten Sektorlinie begrenzt. Die Sektoren der zweiten Seitenwand sind von einer ersten Sektorlinie und einer zweiten Sektorlinie begrenzt. Die den jeweiligen Sektor begrenzende erste Sektorlinie und zweite Sektorlinie stehen in einem Sektorwinkel zueinander. Die Lauffläche ist in eine Vielzahl an zu erfassende Sektoren unterteilbar. Die Sektoren der Lauffläche sind jeweils durch eine erste Sektorlinie und eine zweite Sektorlinie begrenzt. Die den jeweiligen Sektor begrenzende erste Sektorlinie und zweite Sektorlinie stehen in einem zweiten Sektorwinkel zueinander.

Die Druckkammer ist ausgebildet, den zu prüfenden Reifen einem vorgegebenen Druck auszusetzen.

Mit Hilfe des Untergestells ist der Reifen derart liegend lagerbar, sodass die erste Seitenwand in einem ersten Prüfzyklus oben liegt und nach einem Wenden des Reifens die zweite Seitenwand in einem zweiten Prüfzyklus oben liegt.

Die Messvorrichtung umfasst N außenliegende Messköpfe und N innenliegende Messköpfe. Die N außenliegende Messköpfe sind ausgebildet, jeweils wenigstens einen Sektor der ersten Seitenwand und/oder der zweiten Seitenwand vollständig zu erfassen. Die N innenliegende Messköpfe sind ausgebildet, jeweils wenigstens einen Sektor der Lauffläche vollständig zu erfassen. N ist hierbei eine natürliche Zahl.

Die Drehvorrichtung ist ausgebildet, eine Oberfläche des Untergestells, auf welcher der Reifen liegt, und/oder die Messvorrichtung um einen vorgegebenen Drehwinkel um eine Drehachse zu drehen.

Die erfindungsgemäße Vorrichtung zeichnet sich dadurch aus, dass der erste Sektorwinkel den Wert der Formel: $\frac{360°}{N \cdot 2}$ und der zweite Sektorwinkel den Wert der Formel: $\frac{360°}{N \cdot 4}$ aufweist. Die Größe des Drehwinkels entspricht dem Wert des ersten Sektorwinkels.

Die Größe des durch einen Messkopf erfassten Sektors wird hierbei durch die Anzahl der Messköpfe definiert, wobei die Anzahl der außenliegenden Messköpfe und die Anzahl der innenliegenden Messköpfe gleich sind. Erfindungsgemäß sind die außenliegenden Messköpfe derart ausgebildet, dass diese Sektoren erfassen, welche einen Sektorwinkel aufweisen, der jeweils dem zweifachen des Sektorwinkels eines von einem innenliegenden Messkopf erfassten Sektors entspricht.

Aufgrund dieser Definition der Sektorgröße relativ zu der Anzahl an Messköpfen ist es möglich, einen Prüfzyklus mit nur einer Druckänderung und einer Drehung der Sektoren relativ zu den Messköpfen durchzuführen. In einem ersten Prüfzyklus werden die gesamte Seitenwand auf einer Seite des Reifens und die Hälfte der Sektoren der Lauffläche erfasst. In einem zweiten Prüfzyklus werden die gesamte Seitenwand der anderen Seite des Reifens und die andere Hälfte der Sektoren der Lauffläche erfasst. Nach Beendigung des ersten Prüfzyklus und des zweiten Prüfzyklus ist der Reifen vollständig geprüft.

Die gesamte benötigte Prüfdauer für die Prüfung eines Reifens wird aufgrund der besonderen Definition der Abmessungen der Sektorengröße in besonders vorteilhafter Weise auf ein Minimum reduziert.

Ein besonders vorteilhaftes Verhältnis zwischen der Auflösung der erfassten Sektoren und der hierzu benötigten Anzahl an Messköpfen ergibt sich bei einer Vorrichtung, bei welcher die Variable N gleich 2 oder 3 ist. Die derartige Vorrichtung weist zwei oder drei außenliegende Messköpfe und zwei oder drei innenliegende Messköpfe auf.

Eine Vorrichtung, bei der die Variable N gleich 1 ist, benötigt einen relativ großen Sektorwinkel. Hierbei verzerrt sich im Randbereich das Messergebnis. Jedoch kann dies bei einem ausreichend großen Reifen dennoch zu einem ausreichend guten Messergebnis führen, sodass der Vorteil durch die zusätzlich reduzierte Anzahl an Messköpfen hervorzuheben ist.

Eine Vorrichtung, bei der die Variable N größer als 2 oder 3 ist, beispielsweise 4 oder 5 oder 6 oder mehr, hat zwar einen relativ hohen Wartungs- und Kalibrieraufwand. Ferner ist die Positionierung der Messköpfe mit zunehmender Anzahl aufwändiger. Allerdings ist eine entsprechende Vorrichtung mit vergleichsweise kleinen Messköpfen und einer einfachen Kalibrierung im speziellen Anwendungsfall ohne weiteres möglich.

In einer vorteilhaften Weiterbildung weist das Untergestell oder die Messvorrichtung die Drehvorrichtung auf. Eine in dem Untergestell angeordnete Drehvorrichtung, etwa ein Drehteller, ermöglicht einen einfachen Aufbau der Messvorrichtung, da die an die Messköpfe angeschlossenen Kabel nicht über eine Kabelkette oder einer Kabelschleppkette mitgezogen werden müssen. Demgegenüber hat eine an der Messvorrichtung angeordnete Drehvorrichtung den Vorteil, dass wenig Schwingungen in den Reifen eingebracht werden. Hierbei ist jedoch zu beachten, dass bei einer Drehung der Messköpfe auch eine Schwingung in der Messvorrichtung eingebracht werden kann und somit auch die Messvorrichtung vor einer weiteren Messung grundsätzlich ausschwingen muss.

Vorteilhaft ist die Drehvorrichtung ausgebildet, den Reifen oder die Messvorrichtung während des Prüfzyklus zu drehen. Dies ist besonders vorteilhaft, während die Druckkammer einen Prüfdruck aufweist, da somit vor der Drehung kein Nenndruck hergestellt werden muss und die Druckkammer nochmals evakuiert oder mit Druck beaufschlagt werden müsste.

Vorteilhaft hat der innenliegende Messkopf und/oder der außenliegende Messkopf einen Erfassungsbereich, der größer als der zu erfassende Sektor ist. Denn der Erfassungsbereich wird durch eine Vielzahl an Faktoren bestimmt, wie beispielsweise der Abstand zu dem zu erfassenden Bereich, der Brennweite und der Sensorgröße des Messkopfs. Auch kann die Form des Sensors, welche meist rechteckig ist, den Erfassungsbereich beeinflussen. Entsprechend kann bei zwei zueinander angrenzenden, erfassten Sektoren im Erfassungsbereich ein Überlappungsbereich auftreten. In einem nachgelagerten Schritt, kann der den Sektor umgebende Bereich entfernt werden, wodurch Überlappungsbereiche entfernt werden.

In einer weiteren bevorzugten Ausgestaltung steht die erste Sektorlinie des ersten Sektors der ersten Seitenwand und/oder der zweiten Seitenwand in einem vorgegebenen Winkel zu der ersten Sektorlinie des ersten Sektors der Lauffläche. Hierbei ist es besonders bevorzugt, wenn der Winkel gleich Null ist. Denn dann ergibt sich eine besonders einfache Zusammensetzung der jeweils mittels eines Messkopfs erfassten Sektors in der nachfolgenden Bildbearbeitung. Insbesondere ist durch die geometrische definierte Zuordnung der Sektoren der Rechenaufwand in der nachfolgenden Bildbearbeitung deutlich geringer. Die erfassten Sektoren können relativ einfach zusammengesetzt werden, und zwar ohne Zuhilfenahme eines Referenzpunkts in den Abbildungen selbst.

Vorteilhaft umfasst die Vorrichtung eine Wendevorrichtung, welche ausgebildet ist, den zu prüfenden Reifen um eine Wendeachse zu wenden. Hierbei hat es sich als vorteilhaft herausgestellt, wenn die Wendeachse und die erste Sektorlinie des ersten Sektors der Lauffläche zueinander parallel und in einer Ebene angeordnet sind, wobei die Ebene durch die Sektorlinie des ersten Sektors definiert ist. Aufgrund einer Wendung des Reifens um eine Wendeachse, welche in einem solchen direktem Bezug zu der Anordnung der Sektoren der Lauffläche steht, kann der Reifen durch die Wendung nicht nur gewendet, sondern zugleich ausgerichtet werden, so dass keine separate Ausrichtung der Messköpfe relativ zu den Sektoren mehr notwendig ist. Aufgrund der gleichzeitigen Ausrichtung der Messköpfe relativ zu den zu erfassenden Sektoren beim Wenden wird zusätzlich Zeit eingespart.

Hierzu ist zu ergänzen, dass die Ebene durch die Sektorlinie definiert ist, da die Sektorlinie verschiedene Positionen entlang der Rotationsachse des Reifens einnehmen kann. Die Wendeachse ist somit entlang des Querschnitts des Reifens angeordnet, welcher entlang der Sektorlinie verläuft. Besonders bevorzugt ist es, wenn die Wendeachse und die erste Sektorlinie des ersten Sektors der Lauffläche koaxial verlaufen.

Ferner ist es bevorzugt, dass eine zwischen zwei benachbarten außenliegenden Messköpfen verlaufende erste Ausrichtungslinie in einer Draufsicht von oben in einem Winkel, dem Ausrichtungswinkel, zu einer zwischen zwei benachbarten innenliegenden Messköpfen verlaufende zweite Ausrichtungslinie steht. Vorteilhaft ist dieser Winkel halb so groß wie der Sektorwinkel des Sektors der Lauffläche. Indem die Messköpfe meist mittig relativ zu dem zu erfassenden Sektor angeordnet sind, können somit die außenliegenden Messköpfe relativ zu den innenliegenden Messköpfe verdreht zueinander angeordnet werden. Bei einer Vorrichtung mit zwei außenliegenden Messköpfe und zwei innenliegende Messköpfe ergibt sich ein Winkel zwischen den Ausrichtungslinien von 22.5°.

Vorteilhaft ist die Anzahl der Sektoren der ersten Seitenwand gleich 4 oder gleich 6 ist. Weiter vorteilhaft ist die Anzahl der Sektoren der Lauffläche gleich 8 oder gleich 12. Weiter bevorzugt ist es, dass die Anzahl der Sektoren der zweiten Seitenwand gleich 4 oder gleich 6 ist. Die Anzahl der Sektoren ist jedoch durch die Anzahl der Messköpfe definiert.

Ein weiterer Aspekt der Erfindung ist auf ein Verfahren zum Prüfen eines Reifens mittels der erfindungsgemäßen Prüfvorrichtung gerichtet.

Das Verfahren zur Prüfung des Reifens weist die folgenden Schritte auf: a) Anordnen des zu prüfenden Reifens in einer liegenden Position in der Druckkammer; b) Durchführen eines ersten Prüfzyklus zur Erfassung aller Sektoren der ersten Seitenwand und einer vorgegebenen Anzahl an Sektkoren in einem ersten Erfassungsbereich der Lauffläche; c) Wenden des Reifens; und d) Durchführen eines zweiten Prüfzyklus zur Erfassung aller Sektoren der zweiten Seitenwand und einer vorgegebenen Anzahl an Sektkoren in einem zweiten Erfassungsbereich der Lauffläche. Der erste Erfassungsbereich und der zweite Erfassungsbereich umfassen gemeinsam alle Sektoren der Lauffläche.

Das Verfahren zeichnet sich dadurch aus, dass in zwei Prüfzyklen der gesamte Reifen erfasst und geprüft werden kann.

Der Erfassungsbereich umfasst jeweils mehrere Sektoren, die jedoch nicht nebeneinander angeordnet sein müssen. Vielmehr sind die erfassten Sektoren vorzugsweise gleichmäßig entlang des Umfangs des Reifens verteilt angeordnet.

Ein Prüfzyklus kann beispielsweise die folgende Schritte umfassen: a) Positionieren der Messköpfe in einer Prüfposition; b) Erfassen der den Messköpfen zugeordneten Sektoren; c) Erzeugen eines Prüfdrucks in der Druckkammer; d) Erfassen der den Messköpfen zugeordneten Sektoren; e) Drehen des Untergestells und/oder der Messköpfe um eine Drehachse; f) Erfassen der den Messköpfen zugeordneten Sektoren; g) Herstellung eines Nenndrucks in der Druckkammer; h) Erfassen der den Messköpfen zugeordneten Sektoren; und i) Positionieren der Messköpfe in einer Standby-Position.

Ein Nenndruck entspricht beispielsweise dem die Vorrichtung umgebenden Luftdruck, welcher gewöhnlich der Luftdruck der Atmosphäre ist und etwa 1 bar beträgt. Der Prüfdruck kann ein erzeugter Unterdruck sein, der durch Evakuieren der Druckkammer erzeugt werden kann und beispielsweise 0,5 bis 0,7 bar entspricht.

Der Messkopf misst bei einer Messung einen etwas größeren Bereich als den zu erfassenden Sektor, sodass ein Teilbereich des gemessenen Bereichs zu einem Sektor sich mit einem Teilbereich eines gemessenen Bereichs zu einem benachbarten Sektor überlappt. Der überlappende Bereich wird bei einem nachfolgenden Bearbeitungsvorgang aus den gemessenen Messbereichen mittels einer Bildverarbeitungssoftware entfernt, sodass sich ein nahtlos zusammengefügtes Messbild ergibt.

In einer vorteilhaften Ausgestaltung des Prüfzyklus werden der Reifen oder die Messköpfe während Schritt e) um 60° oder um 90° oder um 180° gedreht. Eine 60° Drehung ergibt sich bei einer Vorrichtung mit drei außenliegenden Messköpfen und drei innenliegenden Messköpfen. Eine 90° Drehung ergibt sich bei einer Vorrichtung mit zwei außenliegenden Messköpfen und zwei innenliegenden Messköpfen. Eine 180° Drehung ergibt sich bei einer Vorrichtung mit einem außenliegenden Messkopf und einem innenliegenden Messkopf.

Nachfolgend werden die erfindungsgemäße Vorrichtung zum Prüfen eines Reifens sowie weitere Merkmale und Vorteile der Erfindung anhand von Ausführungsbeispielen näher erläutert, die in den Figuren schematisch dargestellt sind. Hierbei zeigen:

Fig. 1     eine Seitenansicht einer Vorrichtung zum Prüfen eines Reifens in einer ersten Ausführungsform;
Fig. 2     einen Reifen;
Fig. 3     einen Querschnitt durch einen Reifen entlang der Linie III-III von Fig. 2;
Fig. 4a    eine Draufsicht auf die Vorrichtung zum Prüfen eines Reifens in der ersten Ausführungsform;
Fig. 4b    eine Draufsicht auf die Vorrichtung zum Prüfen eines Reifens in einer zweiten Ausführungsform;
Fig. 5     eine Seitenansicht der Vorrichtung zum Prüfen eines Reifens während eines ersten Prüfzyklus, einem Wenden des Reifens und eines zweiten Prüfzyklus;
Fig. 6a    den Reifen und die Messköpfe während eines ersten Prüfzyklus zeitlich vor einem einmaligen Drehen des Reifens;
Fig. 6b    den Reifen und die Messköpfe von Fig. 6a zeitlich nach einem einmaligen Drehen des Reifens;
Fig. 6c    den Reifen von Fig. 6b während des Wendens des Reifens;
Fig. 6d    den Reifen von Fig. 6c während eines zweiten Prüfzyklus zeitlich vor einem einmaligen Drehen des Reifens;
Fig. 6e    den Reifen von Fig. 6d während eines zweiten Prüfzyklus zeitlich nach einem einmaligen Drehen des Reifens;
Fig. 7a    die Anordnung der zu erfassenden Sektoren in dem ersten Prüfzyklus;
Fig. 7b    die Anordnung der zu erfassenden Sektoren in dem zweiten Prüfzyklus ;
Fig. 8     die Druckzustände in der Druckkammer während des ersten oder zweiten Prüfzyklus;
Fig. 9a    eine Seitenansicht einer Vorrichtung zum Prüfen eines Reifens in einer dritten Ausführungsform;
Fig. 9b    eine Draufsicht auf die Vorrichtung gemäß Fig. 9a;
Fig. 9c    eine perspektivische Ansicht der Vorrichtung gemäß Fig. 9a;
Fig. 10a   eine Seitenansicht einer Vorrichtung zum Prüfen eines Reifens in einer vierten Ausführungsform;
Fig. 10b   eine Draufsicht auf die Vorrichtung gemäß Fig. 10a;
Fig. 10c   eine perspektivische Ansicht der Vorrichtung gemäß Fig. 10a;
Fig. 10d   eine farbige Draufsicht auf die Vorrichtung gemäß Fig. 10a entsprechend Fig. 10b;
Fig. 10e   eine perspektivische des Reifens und der Messköpfe während des ersten Prüfzyklus;
Fig. 10f   eine Draufsicht auf den Reifen und die Messköpfe während des ersten Prüfzyklus;
Fig. 10g   eine perspektivische des Reifens und der Messköpfe während des zweiten Prüfzyklus;
Fig. 10h   eine Draufsicht auf den Reifen und die Messköpfe während des zweiten Prüfzyklus;

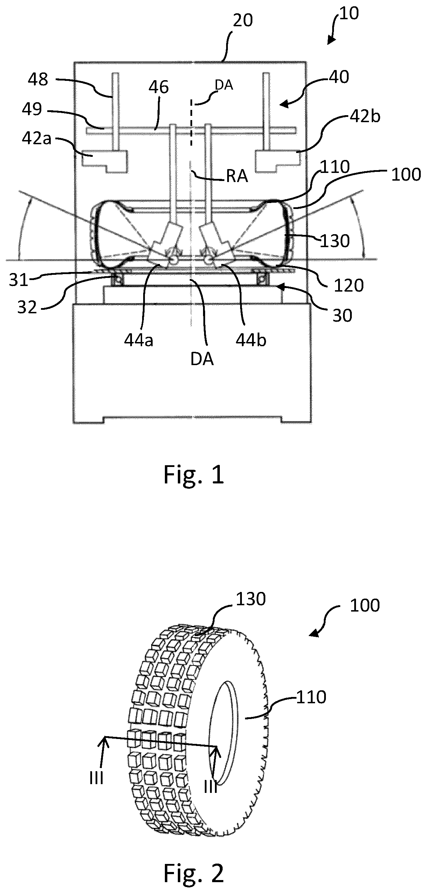

Fig.1 zeigt eine Vorrichtung 10 zum Prüfen eines Reifens 100 mittels eines interferometrischen Messverfahrens. Die Vorrichtung 10 umfasst eine Druckkammer 20, ein Untergestell 30, eine Messvorrichtung 40, die eine Vielzahl an Messköpfen 42a, 42b, 44a, 44b aufweist, und eine in Fig. 1 nicht dargestellte Wendevorrichtung 50.

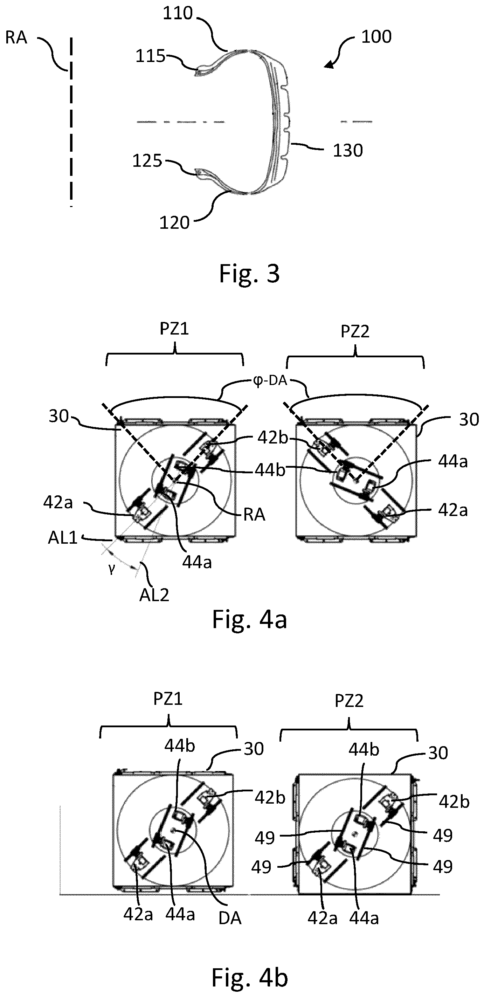

Der zu prüfende Reifen 100 ist in Fig. 2 und Fig. 3 detaillierter gezeigt. Der Reifen 100 weist eine erste Seitenwand 110, eine zweite Seitenwand 120 und eine Lauffläche 130 auf. An dem radial innenliegenden Ende der ersten Seitenwand 110 befindet sich eine erste Wulst 115. An dem radial innenliegenden Ende der zweiten Seitenwand 120 befindet sich eine zweite Wulst 125. Der Reifen 100 ist um eine Rotationsachse RA des Reifens 100 rotationssymmetrisch aufgebaut.

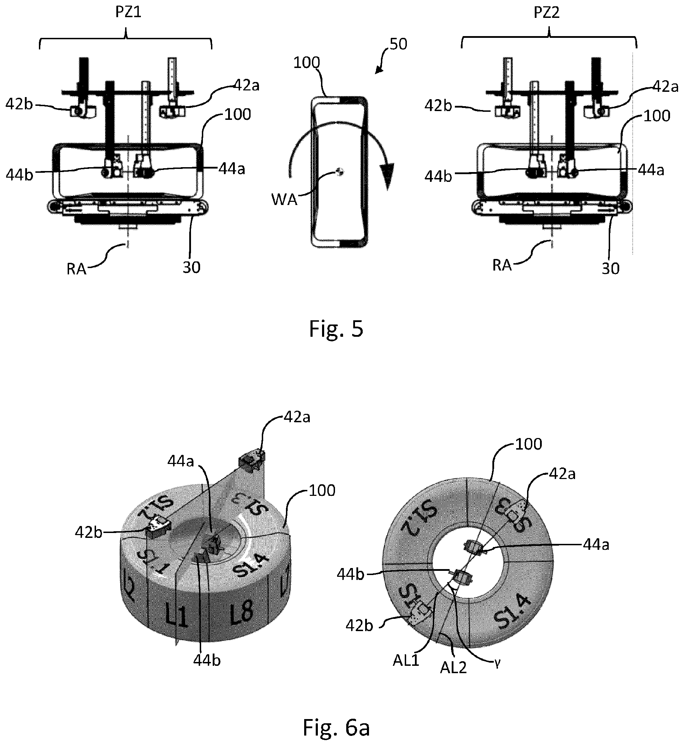

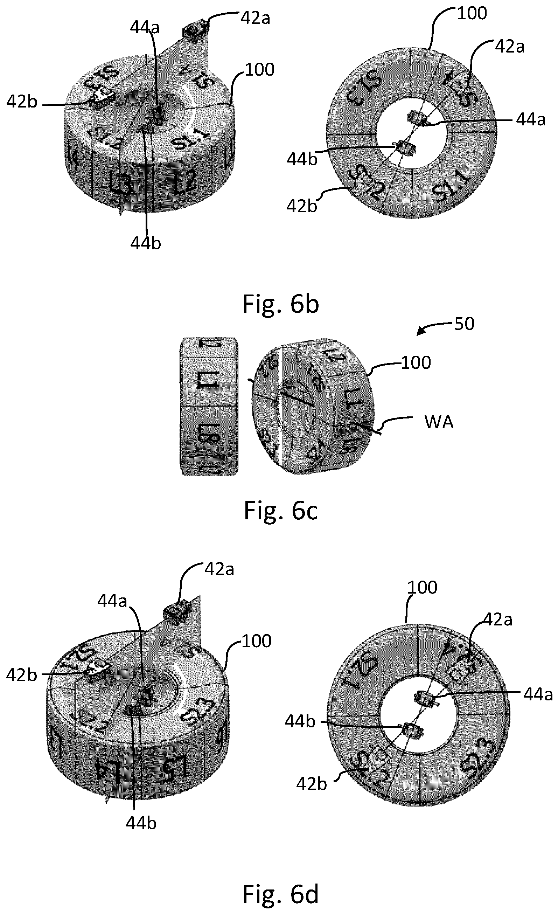

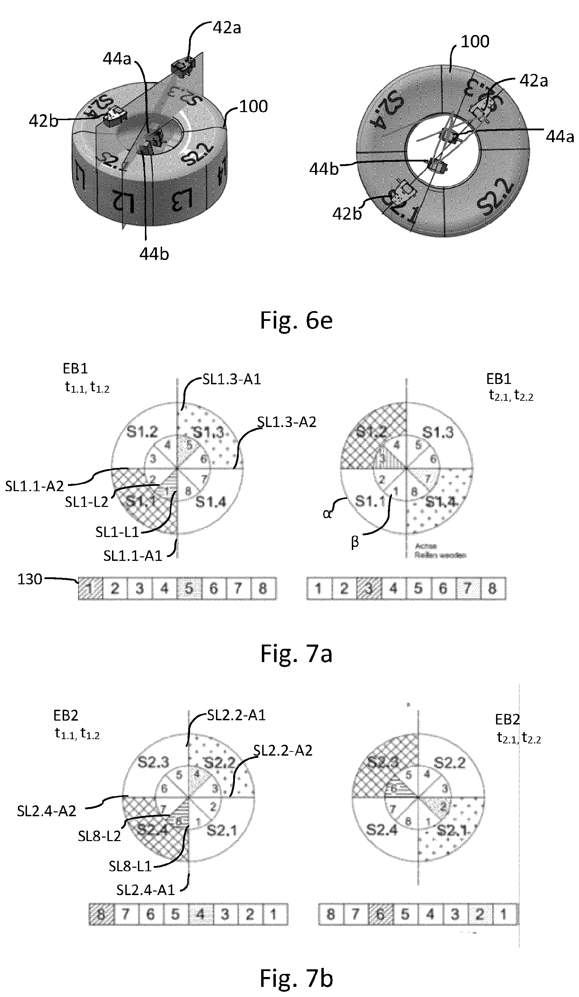

Die erste Seitenwand 110, die zweite Seitenwand 120 und die Lauffläche 130 werden in eine Vielzahl an Sektoren unterteilt. In den Figuren 6a bis 6e sowie 7a und 7b ist eine beispielhafte Unterteilung des Reifens 100 gezeigt, die sich bei einer Vorrichtung 10 mit zwei außenliegenden Messköpfen 42a, 42b und zwei innenliegenden Messköpfen 44a, 44b ergibt.

Die erste Seitenwand 110 und die zweite Seitenwand 120 sind jeweils in vier Sektoren S1.1 bis S1.4 und S2.1 bis S2.4 unterteilt. Die Lauffläche 130 ist in acht Sektoren L1 bis L8 unterteilt. Die Sektoren der ersten Seitenwand 110, der zweiten Seitenwand 120 sind jeweils gleich groß. Die Sektoren der Lauffläche 130 sind ebenfalls jeweils gleich groß.

Die Sektoren S1.1 bis S1.4 der ersten Seitenwand 110 sind jeweils durch eine erste Sektorlinie SL1.1-A1 bis SL1.4-A1 und eine zweite Sektorlinie SL1.1-A2 bis SL1.4-A2 begrenzt. In dem vorliegenden Beispiel ist die erste Sektorlinie SL1.1-A1 bis SL1.4-A1 in einer Draufsicht von oben auf den Reifen 100 im Uhrzeigersinn vor der zweiten Sektorlinie SL1.1-A2 bis SL1.4-A2 angeordnet. Jede Sektorlinie SL1.1-A1 bis SL1.4-A1, SL1.1-A2 bis SL1.4-A2 schneidet die Rotationsachse RA des Reifens 100. Die erste Sektorlinie SL1.1-A1 bis SL1.4-A1 steht in einem ersten Sektorwinkel $\alpha$ relativ zur zweiten Sektorlinie SL1.1-A2 bis SL1.4-A2 eines gemeinsamen Sektors S1.1 bis S1.4. Die Sektorlinien SL2.1-A1 bis SL2.4-A1, SL2.1-A2 bis SL2.4-A2 der zweiten Seitenwand 120 sind entsprechend zu den Sektorlinien SL1.1-A1 bis SL1.4-A1, SL1.1-A2 bis SL1.4-A2 der ersten Seitenwand 110 verteilt angeordnet.

Die Sektoren L1 bis L8 der Lauffläche 130 sind jeweils durch eine erste Sektorlinie SL1-L1 bis SL8-L1 und eine zweite Sektorlinie SL1-L2 bis SL1-L2 begrenzt. In dem vorliegenden Beispiel ist die erste Sektorlinie SL1-L1 bis SL8-L1 in einer Draufsicht von oben auf den Reifen 100 im Uhrzeigersinn vor der zweiten Sektorlinie SL1-L2 bis SL8-L2 angeordnet. Jede Sektorlinie SL1-L1 bis SL8-L1, SL1-L2 bis SL8-L2 schneidet die Rotationsachse RA des Reifens 100. Die erste Sektorlinien SL1-L1 bis SL8-L1 steht in einem zweiten Sektorwinkel $\beta$ relativ zur zweiten Sektorlinie SL1-L2 bis SL8-L2 eines gemeinsamen Sektors L1 bis L8.

Die Druckkammer 20 umfasst Zugangsbereiche, durch welche der Reifen 100 auf in der Regel einem Förderband in die Druckkammer 20 gefördert werden kann. Die Zugangsbereiche können geschlossen werden, sodass die Druckkammer 20 einen hermetisch verschlossen Raum bildet, in welchem der Reifen 100 geprüft werden kann. Ferner weist die Druckkammer 20 eine nicht dargestellte Vakuumpumpe auf, die ausgebildet ist, die Druckkammer 20 zu evakuieren. Hierbei wird mittels der Vakuumpumpe Luft aus der Druckkammer 20 gepumpt, bis ein Prüfdruck $\rho_{PD}$ erreicht ist. Der Ausgangsdruck in der Druckkammer 20 ist ein Nenndruck $\rho_{ND}$, welcher in der vorliegenden Ausgestaltung durch den die Vorrichtung 10 umgebenden atmosphärischen Druck definiert wird. Denn sobald ein neuer Reifen 100 in die Druckkammer 20 gefördert wird, werden die Zugangsbereiche geöffnet, sodass sich zwangsläufig in der Druckkammer 20 zu diesem Zeitpunkt ein atmosphärischer Druck einstellt. Jedoch könnte vor der ersten Messung dieser atmosphärische Druck mittels der Vakuumpumpe auf einen anderen abweichenden Nenndruck $\rho_{ND}$ gebracht werden. In der Praxis hat sich jedoch gezeigt, dass ein konstanter atmosphärischer Druck sich als Nenndruck $\rho_{ND}$ eignet.

Das Untergestell 30 ist in der Druckkammer 20 angeordnet und ist mit einem Förderband derart verbunden, dass ein Reifen 100 zur Prüfung direkt übergeben werden kann. In der gezeigten Ausgestaltung weist das Untergestell 30 eine Drehvorrichtung 32 auf. Die Drehvorrichtung 32 ermöglicht die Drehung um eine Drehachse DA des auf dem Untergestell 30 liegenden Reifens 100 um einen vorgegebenen Drehwinkel $\varphi$-DA, wie es beispielsweise in Fig. 4b gezeigt ist. Die Drehachse DA ist im Lot zu einer Oberfläche 31 des Untergestells 30 angeordnet, auf welcher der Reifen 100 liegt. Ferner schneidet die Drehachse DA vorzugsweise den Mittelpunkt des Untergestells 30.

Die Messvorrichtung 40 umfasst in der in Fig. 1 dargestellten Ausführungsform zwei außenliegende Messköpfe 42a, 42b, zwei innenliegende Messköpfe 44a, 44b und eine Drehvorrichtung 46.

Die außenliegende Messköpfe 42a, 42b und die innenliegende Messköpfe 44a, 44b sind mit einer Befestigungseinheit 48 verbunden. Die Befestigungseinheit 48 ist ausgebildet, die außenliegende Messköpfe 42a, 42b und die innenliegende Messköpfe 44a, 44b von einer Standby-Position in eine Prüfposition zu verstellen. In der Standby-Position sind die außenliegende Messköpfe 42a, 42b und die innenliegende Messköpfe 44a, 44b oberhalb des Reifens 100 angeordnet, sodass der Reifen 100 in und aus der Druckkammer 20 gefördert werden kann. In der Prüfposition sind die außenliegende Messköpfe 42a, 42b und die innenliegende Messköpfe 44a, 44b derart angeordnet, dass diese den jeweils zu erfassenden Sektor des Reifens 100 messen können. Die Verteilung der Sektoren ist im Nachfolgenden detaillierter beschrieben. Neben einer Verstellung in vertikaler Richtung können die Messköpfe 42a, 42b, 44a, 44b auch in zumindest horizontaler Richtung verstellt werden. Hierzu umfasst die Befestigungseinheit 48 Schienen 49. Die Schienen 49 für den jeweiligen Messkopf 42a, 42b, 44a, 44b können separat voneinander ausgebildet sind. Hierbei ist es möglich, die Schienen 49 zueinander verdreht zu positionieren. Fig. 1 zeigt in einer möglichen Ausgestaltung ein einteiliges Schienensystem. Fig. 4a und Fig. 4b zeigen in einer alternativen Ausgestaltung ein Schienensystem, welches für jeden Messkopf 42a, 42b, 44a, 44b eine separate Schiene 49 aufweist. In dieser Ausgestaltung sind zusätzlich die innenliegenden Messköpfe 44a, 44b mit Schienen 49 verbunden, die in einem Ausrichtungswinkel γ verdreht zu den mit den außenliegenden Messköpfen 42a, 42b verbundenen Schienen 49 angeordnet sind. Hierdurch sind die außenliegenden Messköpfe 42a, 42b entlang einer ersten Ausrichtungslinie AL1 und die innenliegenden Messköpfe 44a, 44b entlang einer zweiten Ausrichtungslinie AL2 angeordnet. Die erste Ausrichtungslinie AL1 ist somit ebenfalls im Ausrichtungswinkel γ relativ zu der zweiten Ausrichtungslinie AL2 angeordnet.

Die Drehvorrichtung 46 ist ausgebildet, die Messköpfe 42a, 42b, 44a, 44b um eine Drehachse DA um einen Drehwinkel φ-DA zu drehen, wie es in Fig. 4a gezeigt ist. Die Drehachse DA ist im Lot zu der Oberfläche 31 angeordnet. Bevorzugt ist die Drehachse DA koaxial mit der Rotationsachse RA des Reifens 100 während einer Prüfung angeordnet. Die Vorrichtung 10 in der in Fig. 1 gezeigten Ausgestaltung weist sowohl eine Drehvorrichtung 46 zur Drehung der Messköpfe 42a, 42b, 44a, 44b als auch eine Drehvorrichtung 32 zur Drehung des auf dem Untergestell 30 liegenden Reifens 100 auf. In der Praxis ist es jedoch in der Regel ausreichend, nur eine Drehvorrichtung 32, 46 vorzusehen, wobei sich die Drehvorrichtung 32 zur Drehung des auf dem Untergestell 30 liegenden Reifens bisher als die zuverlässigere Ausführungsform erwiesen hat.

Die Wendevorrichtung 50 ist in den Zeichnungen nicht detailliert dargestellt. In Fig. 5 und Fig. 6c ist der durch die Wendevorrichtung 50 ausgeführte Wendevorgang dargestellt. Die Wendevorrichtung 50 wendet den Reifen 100 um eine Wendeachse WA, sodass die vormals untenliegende zweite Seitenwand 120 nach dem Wendevorgang oben liegt. In gleicher Weise liegt die vormals obenliegende erste Seitenwand 110 nach dem Wendevorgang unten. Die Wendeachse WA ist hierbei senkrecht zu der Rotationsachse RA angeordnet.

Hervorzuheben ist, dass die Wendeachse WA koaxial zu der ersten Sektorlinie SL1.1-A1 des ersten Sektors L1 der Lauffläche 130 verläuft. Hierdurch wird es in einer einfachen Art und Weise ermöglicht, dass alleine durch das Wenden des Reifens 100 die Anordnung der Sektoren L1 bis L8 der Lauffläche 130 gespiegelt werden. Die Spiegelung ergibt sich, indem die Anordnung der Sektoren L1 bis L8 der Lauffläche 130 bei einer Draufsicht von oben auf den Reifen 100 vor dem Wenden mit der Anordnung der Sektoren L1 bis L8 der Lauffläche 130 bei einer Draufsicht von oben auf den Reifen 100 nach dem Wenden verglichen wird.

Die Prüfung des Reifens 100 umfasst die folgenden Schritte.

In einem ersten Schritt S1 wird der Reifen 100 in einer liegenden Position in der Druckkammer 20 angeordnet. Der Reifen 100 befindet sich in einer liegenden Position, wenn der Reifen 100 auf der erste Seitenwand 110 oder der zweite Seitenwand 120 auf dem Untergestell 30, etwa einem Förderband, aufliegt.

In einem zweiten Schritt S2 wird ein erster Prüfzyklus PZ1 durchgeführt. Hierbei werden alle Sektoren S1.1 bis S1.4 der obenliegenden ersten Seitenwand 110 und ein erster Erfassungsbereich EB1 der Lauffläche 130 erfasst. Der erste Erfassungsbereich EB1 umfasst die Hälfte der Sektoren L1 bis L8 der Lauffläche 130.

In einem dritten Schritt S3 wird der Reifen 100 aus der Druckkammer 20 zu einer Wendevorrichtung 50 gefördert und dort um die Wendeachse WA gewendet. Nach dem Wenden wird der Reifen 100 auf der ersten Seitenwand 110 liegend wieder in die Druckkammer 20 gefördert.

In einem vierten Schritt S4 wird ein zweiter Prüfzyklus PZ2 durchgeführt. Hierbei werden alle Sektoren S2.1 bis S2.4 der obenliegenden zweiten Seitenwand 120 und ein zweiter Erfassungsbereich EB2 der Lauffläche 130 erfasst. Der zweite Erfassungsbereich EB2 umfasst die Hälfte der Sektoren L1 bis L8 der Lauffläche 130, welche sich von den Sektoren L1 bis L8 des ersten Erfassungsbereich EB1 unterscheiden. Der erste Erfassungsbereich EB1 und der zweite Erfassungsbereich EB2 umfassen gemeinsam alle Sektoren L1 bis L8 der Lauffläche 130.

Die jeweiligen Sektoren eines Erfassungsbereichs EB können, wie in Fig. 7a und Fig. 7b dargestellt, über den Reifen 100 verteilt angeordnet sein. Im Folgenden wird beispielhaft anhand der Sektoren L1 bis L8 der Lauffläche 130 die Auswahl eines ersten Erfassungsbereichs EB1 beschrieben. Die Sektoren L1 bis L8 der Lauffläche 130 sind, wie in Fig. 7a gezeigt, entsprechend der Nummerierung in aufsteigender Reihenfolge nebeneinander angeordnet. Zuerst werden die Sektoren L1 und L5 gemessen und anschließend die Sektoren L3 und L7 nach einer Drehung des Reifens 100 um die Rotationsachse RA. Die Sektoren L2, L4, L6 und L8 werden danach, wie in Fig. 7b gezeigt, von einem zweiten Erfassungsbereich EB2 erfasst.

In dem gezeigten Beispiel sind die jeweils zugleich erfassten Sektoren gegenüberliegend angeordnet und somit gleichmäßig verteilt. Jedoch ist eine alternative Anordnung ebenfalls denkbar, bei der beispielsweise die von einem Erfassungsbereich erfassten Sektoren zumindest teilweise nebeneinander liegen. Diese Ausgestaltung ist in den Zeichnungen jedoch nicht gezeigt.

Ferner sind die Sektoren der Seitenwände 110, 120 vergleichbar zu dem zuvor genannten Beispiel verteilt angeordnet. Die Sektoren der ersten Seitenwand 110 oder der zweiten Seitenwand 120 sind jedoch jeweils vollständig von einem Erfassungsbereich EB1 oder EB2 erfasst, wohingegen die Sektoren der Lauffläche 130 nur zur Hälfte von dem ersten Erfassungsbereich EB1 oder dem zweiten Erfassungsbereich EB2 erfasst sind.

Nach dem vollständigen Durchlaufen des Prüfdurchgangs ist der Reifen 100 vollständig vermessen.

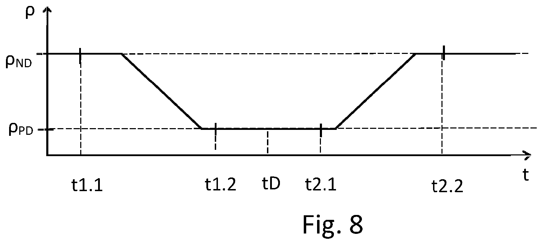

Der zuvor beschrieben erste Prüfzyklus PZ1 und der zweite Prüfzyklus PZ2 sind in Fig. 8 dargestellt. Der Prüfzyklus PZ1, PZ2 umfasst die folgenden Schritte.

In einem ersten Schritt S1$_{PZ}$ werden die Messköpfe 42a, 42b, 44a, 44b in eine Prüfposition gebracht. Die Messköpfe 42a, 42b, 44a, 44b in einer möglichen Prüfposition sind beispielsweise in Fig. 1 und Fig. 5 gezeigt. Hierbei ist hervorzuheben, dass die innenliegenden Messköpfe 44a, 44b in einen durch die Größe des Reifens 100 bedingten Abstand zu dem zu erfassenden Sektor der Lauffläche 130 positioniert werden.

In einem zweiten Schritt S2$_{PZ}$, der zum Zeitpunkt t1.1 durchgeführt wird, erfassen die Messköpfe 42a, 42b, 44a, 44b den jeweils zugeordneten Sektor. Diese Messung erfolgt während in der Druckkammer 20 der Nenndruck $\rho_{ND}$ vorliegt.

In einem dritten Schritt S3$_{PZ}$ wird die Druckkammer 20 evakuiert, bis ein Prüfdruck $\rho_{PD}$ erreicht ist. Der Prüfdruck $\rho_{PD}$ liegt ausreichend unter dem Nenndruck $\rho_{ND}$, um eine interferometrische Messung durchzuführen.

In einem vierten Schritt S4$_{PZ}$, der zum Zeitpunkt t1.2 durchgeführt wird, erfassen die Messköpfe 42a, 42b, 44a, 44b den jeweils zugeordneten Sektor, welcher dem Sektor des im zweiten Schritt S2$_{PZ}$ gemessenen Sektors entspricht. Diese Messung erfolgt während in der Druckkammer 20 der Prüfdruck $\rho_{PD}$ vorliegt.

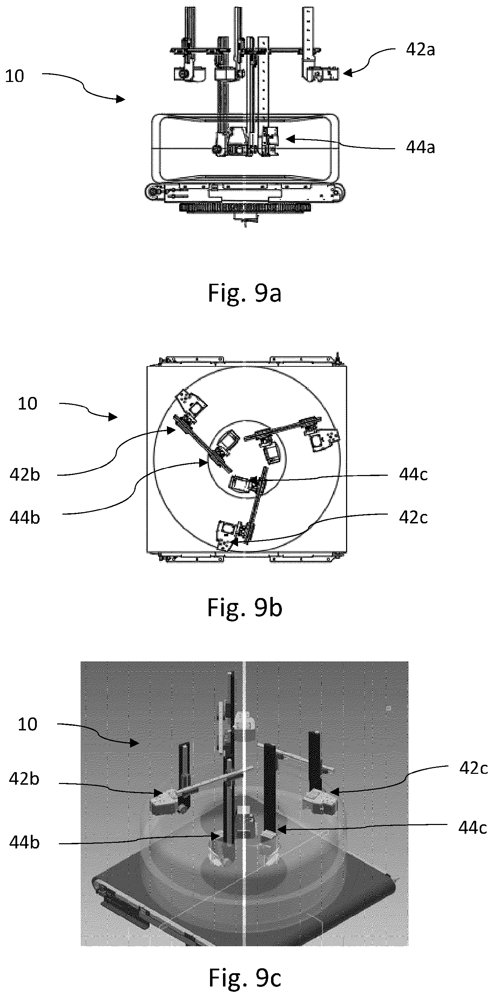

In einem fünften Schritt S5$_{PZ}$ wird das Untergestell 30 oder die Messvorrichtung 40 um die Drehachse DA gedreht, welche koaxial zu der Rotationsachse RA des Reifens 100 verläuft. In der vorliegenden Ausgestaltung mit zwei außenliegenden Messköpfen 42a, 42b und zwei innenliegenden Messköpfen 44a, 44b werden hierbei der Reifen 100 relativ zu den Messköpfen 42a, 42b, 44a, 44b um 90° gedreht. Bei einer Vorrichtung mit drei außenliegenden Messköpfen 42a, 42b und drei innenliegenden Messköpfen 44a, 44b, wie sie in den Fig. 9a bis 9c gezeigt ist, wird der Reifen 100 relativ zu den Messköpfen 42a, 42b, 44a, 44b um 60° gedreht. Bei einer Vorrichtung mit einem außenliegenden Messkopf 42a, 42b und einem innenliegenden Messkopf 44a, 44b wird der Reifen 100 relativ zu den Messköpfen 42a, 42b, 44a, 44b um 180° gedreht. Die Drehung erfolgt während in der Druckkammer 20 der Prüfdruck $\rho_{PD}$ vorliegt.

In einem sechsten Schritt S6$_{PZ}$, der zum Zeitpunkt t2.1 durchgeführt wird, erfassen die Messköpfe 42a, 42b, 44a, 44b den jeweils zugeordneten Sektor. Diese Messung erfolgt während in der Druckkammer 20 der Prüfdruck $\rho_{PD}$ vorliegt.

In einem siebten Schritt S7$_{PZ}$ wird in der Druckkammer 20 der Nenndruck $\rho_{ND}$ wiederhergestellt.

In einem achten Schritt S8$_{PZ}$, der zum Zeitpunkt t2.2 durchgeführt wird, erfassen die Messköpfe 42a, 42b, 44a, 44b den jeweils zugeordneten Sektor, welcher dem Sektor des im sechsten Schritt S6$_{PZ}$ gemessenen Sektors entspricht. Diese Messung erfolgt während in der Druckkammer 20 der Nenndruck $\rho_{ND}$ vorliegt.

In einem neunten Schritt S9$_{PZ}$ werden die Messköpfe 42a, 42b, 44a, 44b in die Standby-Position gebracht, damit der Reifen 100 wieder aus der Druckkammer 20 gefördert werden kann.

Die in dem ersten Prüfzyklus PZ1 erfassten Sektoren S1.1 bis S1.4, L1, L3, L5, L7 sind in Fig. 7a dargestellt. Die im inneren Kreis dargestellten Sektoren entsprechen den auf der Lauffläche 130 verteilten Sektoren und die im radial außenliegenden Kreis angeordneten Sektoren entsprechen den Sektoren der ersten Seitenwand 110. Zur Verdeutlichung sind die Sektoren der Lauffläche 130 darunter in einer "aufgeklappten" oder "ausgerollten" Art dargestellt.

Die in dem zweiten Prüfzyklus PZ2 erfassten Sektoren S2.1 bis S2.4, L8, L6, L4, L2 sind in Fig. 7b dargestellt.

Indem in jedem Prüfzyklus PZ1, PZ2 alle Sektoren der ersten Seitenwand 110 oder der zweiten Seitenwand 120 erfasst werden und die Sektoren der Lauffläche 130 nur zur Hälfte ist die Anordnung der Wendeachse WA relativ zu den zu erfassenden Sektoren der innenliegenden Messköpfe 44a, 44b entscheidend, um eine nachfolgende Anpassung der Ausrichtung des Reifens 100 zu vermeiden.

Hierzu ist bei der vorliegenden Ausgestaltung die Wendeachse WA koaxial mit der ersten Sektorlinie SL1-L1 des ersten Sektors L1 der Lauffläche 130 angeordnet. Es ist zusätzlich zu beachten, dass bei einem relativ zu dem zu erfassenden Sektor mittig angeordneten Messkopf zusätzlich eine nachfolgende Bearbeitung reduziert werden kann.

Die in den Fig. 9a bis 9c gezeigte Ausführungsform der Vorrichtung 10 unterscheidet sich von der in Fig. 1 dargestellten Ausführungsform darin, dass die Messvorrichtung 40 drei außenliegende Messköpfe 42a, 42b, 42c und drei innenliegende Messköpfe 44a, 44b, 44c aufweist. Diese Anordnung der Messköpfe 42a, 42b, 42c, 44a, 44b, 44c hat zur Folge, dass der Reifen 100 nach oder bei dem Wenden um 180° gedreht werden muss, damit in der Lauffläche 130 alle Sektoren L1 bis L8 lagerichtig erfasst werden. Die in den Fig. 9a bis 9c gezeigte Ausführungsform ermöglicht eine schnellere Prüfung als die Ausführungsform gemäß Fig. 1.

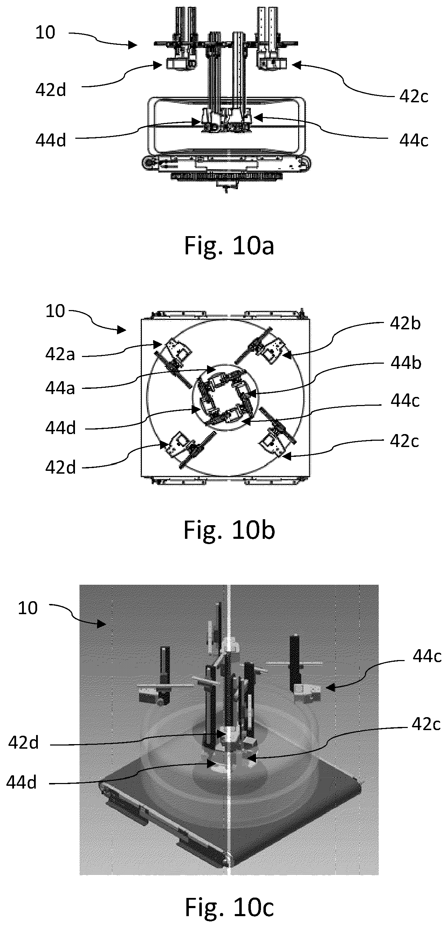

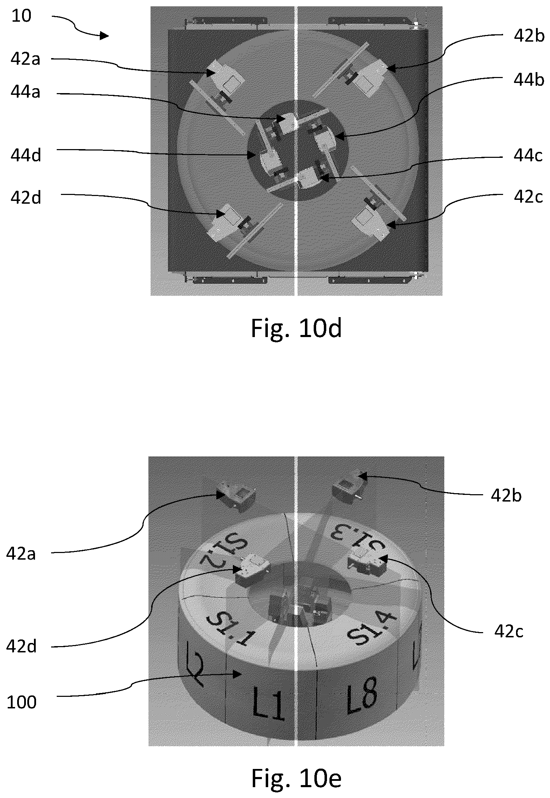

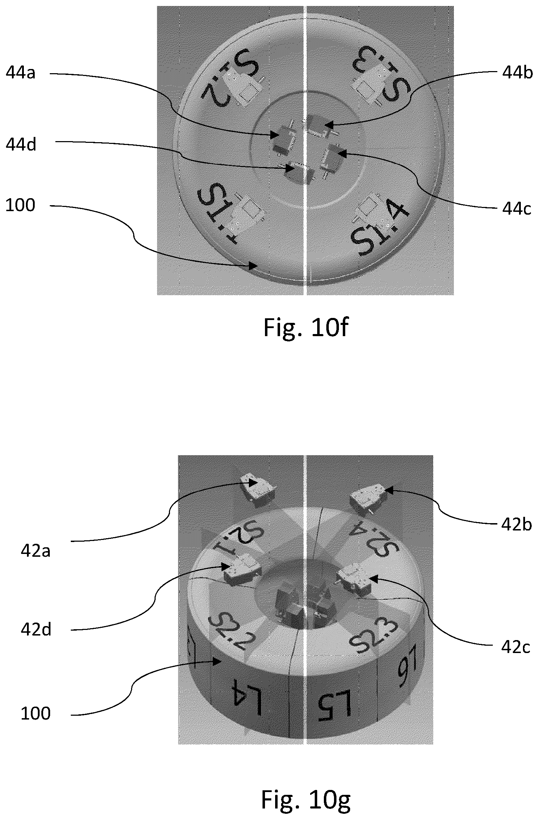

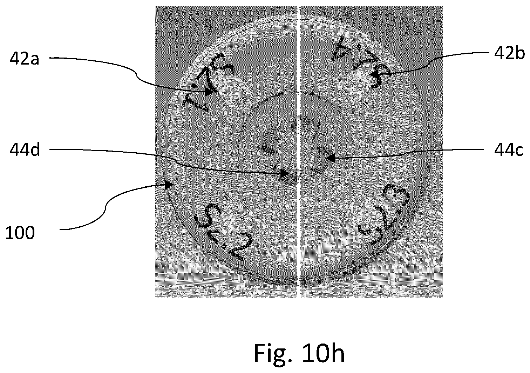

Die in den Fig. 10a bis 10h gezeigte Ausführungsform der Vorrichtung 10 unterscheidet sich von der in Fig. 1 dargestellten Ausführungsformen darin, dass die Messvorrichtung 40 vier außenliegende Messköpfe 42a, 42b, 42c, 42d und vier innenliegende Messköpfe 44a, 44b, 44c, 44d aufweist. Diese Anordnung der Messköpfe 42a, 42b, 42c, 42d, 44a, 44b, 44c, 44d hat zur Folge, dass bei derselben Größe der Sektor S1.1 bis S1.4, S2.1 bis S2.4 und L1 bis L8 wie bei der Ausführungsform gemäß Fig. 1 keine zusätzliche Drehung des Reifen 100 nach oder bei dem Wenden erfolgen muss, um die fehlenden Sektoren L8, L6, L4, L2 in der Lauffläche 130 lagerichtig zu erfassen. Die in den Fig. 10a bis 10h gezeigte Ausführungsform ermöglicht eine schnellere Prüfung als die Ausführungsform gemäß Fig. 1 und kommt grundsätzlich ohne eine relative Drehung des Reifens 100 zu den Messköpfen 42, 44 um die Drehachse DA in den Prüfzyklen PZ1 und PZ2 aus.

Die in den Fig. 10a bis 10h gezeigte Ausführungsform benötigt jedoch dann eine Relativdrehung von Reifen 100 und Messköpfen 42, 44 in den Prüfzyklen PZ1 und PZ2, wenn das Gesichtsfeld der Messköpfen 42, 44 reduziert, insbesondere halbiert, wird, um etwa die Auflösung der Messköpfe 42, 44 zu erhöhen. In diesem Fall wird wie bei der Ausführungsform gemäß Fig. 1 gedreht, und es werden alle Sektoren S1.1 bis S1.4, S2.1 bis S2.4 und L1 bis L8 mit beispielsweise der doppelten Auflösung erfasst.

Die beschriebene Vorrichtung 10 zeichnet sich dadurch aus, dass insbesondere nur zwei oder drei oder, je nach Anwendungsfall, auch vier oder mehr außenliegende Messköpfe 42a, 42b, 42c, 42d und zwei oder drei oder, je nach Anwendungsfall, auch vier oder mehr innenliegende Messköpfe 44a, 44b, 44c, 44d vorhanden sind. Hierbei ist das besondere Verhältnis der Größe, der von den außenliegenden Messköpfen erfassten Sektoren relativ zu der Größe der von den innenliegenden Messköpfen erfassten Sektoren entscheidend. Wie zuvor beschrieben, ist die Größe der von den außenliegenden Messköpfen erfassten Sektoren durch den ersten Sektorwinkel $\alpha$ und die Größe der von den innenliegenden Messköpfen erfassten der Sektoren durch den zweiten Sektorwinkel $\beta$ definiert. Der erste Sektorwinkel $\alpha$ ist doppelt so groß wie der zweite Sektorwinkel $\beta$.

Die Vorrichtung 10 ermöglicht somit die vollständige Prüfung des Reifens 100 in nur zwei Prüfzyklen PZ1, PZ2, wobei jeder Prüfzyklus maximal einen Drehvorgang des Reifens 100 aufweist. Hierdurch wird die besonders schnelle und kurze Prüfdauer zur vollständigen Prüfung des Reifens 100 ermöglicht.

**Bezugszeichenliste**

| | |
|---|---|
| 10 | Vorrichtung |
| 20 | Druckkammer |
| 30 | Untergestell |
| 31 | Oberfläche |
| 32 | Drehvorrichtung |
| $\varphi$-RA | Drehwinkel |
| $\varphi$-DA | Drehwinkel |
| 40 | Messvorrichtung |
| 42, 42a, 42b, 42c, 42d | außenliegende Messköpfe |
| 44, 44a, 44b, 44c, 44d | innenliegende Messköpfe |
| 46 | Drehvorrichtung |
| 46DA | Drehachse der Drehvorrichtung |
| 48 | Befestigungseinheit |
| 49 | Schiene |

| | |
|---|---|
| 50 | Wendevorrichtung |
| N | natürliche Zahl größer gleich 2 |
| DA | Drehachse |
| WA | Wendeachse |
| AL1 | ersten Ausrichtungslinie |
| AL2 | zweite Ausrichtungslinie |
| $\gamma$ | Ausrichtungswinkel |
| $\rho_{ND}$ | Nenndruck |
| $\rho_{PD}$ | Prüfdruck |
| EB1 | erster Erfassungsbereich |
| EB2 | zweiter Erfassungsbereich |

| | |
|---|---|
| 100 | Reifen |
| 110 | erste Seitenwand |
| 115 | erste Wulst |
| 120 | zweite Seitenwand |
| 125 | zweite Wulst |
| 130 | Lauffläche |
| S1.1 bis S1.4 | Sektoren der ersten Seitenwand |
| S2.1 bis S2.4 | Sektoren der zweiten Seitenwand |
| SL1.1-A1 bis SL2.4-A1 | erste Sektorlinie |
| SL1.1-A2 bis SL2.4-A2 | zweite Sektorlinie |
| $\alpha$ | erster Sektorwinkel |
| L1 bis L8 | Sektoren der Lauffläche |
| SL1-L1 bis SL8-L1 | erste Sektorlinie |

| SL1-L2 bis SL8-L2 | zweite Sektorlinie |
|---|---|
| β | zweiter Sektorwinkel |
| δ | Linienwinkel |
| RA | Rotationsachse |

PZ1   erster Prüfzyklus
PZ2   zweiter Prüfzyklus

t1.1   Zeitpunkt zu zweitem Schritt; erste Messung bei Nenndruck
t1.2   Zeitpunkt zu vierten Schritt; zweite Messung bei Prüfdruck
tD   Zeitpunkt zu fünftem Schritt; Drehung
t2.1   Zeitpunkt zu sechstem Schritt; dritte Messung bei Prüfdruck
t2.2   Zeitpunkt zu achtem Schritt; vierte Messung bei Nenndruck

**Patentansprüche**

1.   Vorrichtung (10) zum Prüfen von Reifen (100), insbesondere mittels eines interferometrischen Messverfahrens,

wobei der zu prüfende Reifen (100) eine erste Seitenwand (110), eine zweite Seitenwand (120) und eine Lauffläche (130) hat,
wobei die erste Seitenwand (110) und/oder die zweite Seitenwand (120) in eine Vielzahl an zu erfassenden Sektoren (S1.1 bis S1.4; S2.1 bis S2.4) unterteilbar sind,

wobei die Sektoren (S1.1 bis S1.4) der ersten Seitenwand (110) von einer ersten Sektorlinie (SL1.1-A1 bis SL1.4-A1) und einer zweiten Sektorlinie (SL1.1-A2 bis SL1.4-A2) und/oder die Sektoren (S2.1 bis S2.4) der zweiten Seitenwand (120) von einer ersten Sektorlinie (SL2.1-A1 bis SL2.4-A1) und einer zweiten Sektorlinie (SL2.1-A2 bis SL2.4-A2) begrenzt sind,
wobei die den jeweiligen Sektor (S1.1 bis S1.4, S2.1 bis S2.4) begrenzende erste Sektorlinie (SL1.1-A1 bis SL1.4-A1, SL2.1-A1 bis SL2.4-A1) und zweite Sektorlinie (SL1.1-A2 bis SL1.4-A2, SL2.1-A2 bis SL2.4-A2) in einem Sektorwinkel ($\alpha$) zueinanderstehen,

wobei die Lauffläche (130) in eine Vielzahl an zu erfassenden Sektoren (L1 bis L8) unterteilbar ist,

wobei die Sektoren (L1 bis L8) der Lauffläche (130) jeweils durch eine erste Sektorlinie (SL1-L1 bis SL8-L1) und eine zweite Sektorlinie (SL1-L2 bis SL8-L2) begrenzt sind, und
wobei die den jeweiligen Sektor (L1 bis L8) begrenzende erste Sektorlinie (SL1-L1 bis SL8-L1) und zweite Sektorlinie (SL1-L2 bis SL8-L2) in einem zweiten Sektorwinkel ($\beta$) zueinanderstehen;

wobei die Vorrichtung (10) umfasst:

eine Druckkammer (20), in welcher der zu prüfende Reifen (100) einem vorgegebenen Druck ($\rho_{ND}$, $\rho_{PD}$) aussetzbar ist;
ein Untergestell (30), das eine Oberfläche (31) hat, auf welcher der Reifen (100) derart liegend lagerbar ist, dass die erste Seitenwand (110) in einem ersten Prüfzyklus (PZ1) oben liegt und nach einem Wenden des Reifens (100) die zweite Seitenwand (120) in einem zweiten Prüfzyklus (PZ2) oben liegt;
eine Messvorrichtung (40), die umfasst:

N außenliegende Messköpfe (42), die ausgebildet sind, jeweils wenigstens einen Sektor (S1.1 bis S1.4; S2.1 bis S2.4) der ersten Seitenwand (110) und/oder der zweiten Seitenwand (120) vollständig zu erfassen,
N innenliegende Messköpfe (44), die ausgebildet sind, jeweils wenigstens einen Sektor (L1 bis L8) der Lauffläche (130) vollständig zu erfassen, und
wobei N eine natürliche Zahl ist; und

eine Drehvorrichtung (32, 46) zur Drehung der Oberfläche (31) des Untergestells (30), auf welcher der Reifen (100) liegt, und/oder der Messvorrichtung (40) um einen vorgegebenen Drehwinkel ($\varphi$-DA) um eine Dreh-achse (DA),
**dadurch gekennzeichnet, dass**

der erste Sektorwinkel ($\alpha$) den Wert der Formel: $\dfrac{360°}{N \cdot 2}$ aufweist und

der zweite Sektorwinkel ($\beta$) den Wert der Formel: $\dfrac{360°}{N \cdot 4}$ aufweist;

wobei die Größe des Drehwinkels ($\varphi$-DA) dem Wert des ersten Sektorwinkels ($\alpha$) entspricht.

2. Vorrichtung nach Anspruch 1, **dadurch gekennzeichnet, dass** N gleich 2 oder 3 ist.

3. Vorrichtung nach Anspruch 1 oder 2, **dadurch gekennzeichnet, dass** das Untergestell (30) die Drehvorrichtung (32) aufweist oder dass die Messvorrichtung (40) die Drehvorrichtung (46) aufweist.

4. Vorrichtung nach Anspruch 3, **dadurch gekennzeichnet, dass** die Drehvorrichtung (32, 46) ausgestaltet ist, den Reifen (100) oder die Messvorrichtung (40) während des ersten Prüfzyklus (PZ1) und/oder des zweiten Prüfzyklus (PZ2) zu drehen.

5. Vorrichtung nach einem der Ansprüche 1 bis 4, **dadurch gekennzeichnet, dass** der innenliegende Messkopf (44) und/oder der außenliegende Messkopf (42) einen Erfassungsbereich hat, der größer als der zu erfassende Sektor (S1.1 bis S1.4; S2.1 bis S2.4; L1 bis L8) ist.

6. Vorrichtung nach einem der Ansprüche 1 bis 5, **dadurch gekennzeichnet, dass** die erste Sektorlinie (SL1.1-A1, SL2.1-A1) des ersten Sektors (S1.1; S2.1) der ersten Seitenwand (110) und/oder der zweiten Seitenwand (120) in einem Linienwinkel ($\delta$) zu der ersten Sektorlinie (SL1-L1) des ersten Sektors (L1) der Lauffläche (130) steht.

7. Vorrichtung nach Anspruch 6, **dadurch gekennzeichnet, dass** der Linienwinkel ($\delta$) gleich Null ist.

8. Vorrichtung nach einem der Ansprüche 1 bis 7, **gekennzeichnet durch** eine Wendevorrichtung (50), welche ausgestaltet ist, den Reifen (100) um eine Wendeachse (WA) zu wenden.

9. Vorrichtung nach Anspruch 8, **dadurch gekennzeichnet, dass** die Wendeachse (WA) und die erste Sektorlinie (SL1-L1) des ersten Sektors (L1) der Lauffläche (130) zueinander parallel und in einer Ebene angeordnet sind, wobei die Ebene durch die Sektorlinie (SL1-L1) des ersten Sektors (L1) definiert ist.

10. Vorrichtung nach Anspruch 8 oder 9, **dadurch gekennzeichnet, dass** eine erste Ausrichtungslinie (AL1), die zwischen zwei außenliegenden Messköpfe (42) verläuft, in einem Ausrichtungswinkel ($\gamma$) zu einer zweiten Ausrichtungslinie (AL2), die zwischen zwei innenliegenden Messköpfe (44) verläuft, steht; wobei vorzugsweise der Ausrichtungswinkel ($\gamma$) ein spitzer Winkel ist, weiter vorzugsweise zwischen 1° und 22,5° beträgt.

11. Vorrichtung nach Anspruch 10, **dadurch gekennzeichnet, dass** der Ausrichtungswinkel ($\gamma$) halb so groß ist wie der Sektorwinkel ($\beta$) des Sektors (L1 bis L8) der Lauffläche (130).

12. Vorrichtung nach einem der Ansprüche 1 bis 11, **dadurch gekennzeichnet, dass** die Anzahl der Sektoren (S1.1 bis S1.4) der ersten Seitenwand (110) gleich 4 oder gleich 6 ist und dass die Anzahl der Sektoren (L1 bis L8) der Lauffläche (130) gleich 8 oder gleich 12 ist und dass die Anzahl der Sektoren (S2.1 bis S2.4) der zweiten Seitenwand (120) gleich 4 oder gleich 6 ist.

13. Verfahren zum Prüfen von Reifen (100) mittels einer Prüfvorrichtung (10) nach einem der Ansprüche 1 bis 12,

wobei das Verfahren die folgenden Schritte umfasst:

a) Anordnen des zu prüfenden Reifens (100) in einer liegenden Position in der Druckkammer (20);
b) Durchführen eines ersten Prüfzyklus (PZ1) zur Erfassung aller Sektoren (S1.1 bis S1.4) der ersten Seitenwand (110) und einer vorgegebenen Anzahl an Sektoren (L1 bis L8) der Lauffläche (130) in einem ersten Erfassungsbereich (EB1) der Lauffläche (L1 bis L8);
c) Wenden des Reifens (100); und
d) Durchführen eines zweiten Prüfzyklus (PZ2) zur Erfassung aller Sektoren (S2.1 bis S2.4) der zweiten Seitenwand (120) und einer vorgegebenen Anzahl an Sektoren (L1 bis L8) der Lauffläche (130) in einen zweiten Erfassungsbereich (EB2) der Lauffläche (L1 bis L8);

wobei der erste Erfassungsbereich (EB1) und der zweite Erfassungsbereich (EB2) gemeinsam alle Sektoren (L1 bis L8) der Lauffläche (130) umfassen.

14. Verfahren nach Anspruch 13, **dadurch gekennzeichnet, dass** der erste Prüfzyklus (PZ1) und/oder der zweite Prüfzyklus (PZ2) die folgende Abfolge an Schritten aufweist:

   a) Positionieren der Messköpfe (42, 44) in einer Prüfposition;
   b) Erfassen der den Messköpfen (42, 44) zugeordneten Sektoren;
   c) Erzeugen eines Prüfdruck (pPD) in der Druckkammer (20);
   d) Erfassen der den Messköpfen (42, 44) zugeordneten Sektoren;
   e) Drehen des Untergestells (30) und/oder der Messköpfe (42, 44) um die Drehachse (DA);
   f) Erfassen der den Messköpfen (42, 44) zugeordneten Sektoren;
   g) Erzeugen eines Nenndrucks (pND) in der Druckkammer (20);
   h) Erfassen der den Messköpfen (42, 44) zugeordneten Sektoren; und
   i) Positionieren der Messköpfe (42, 44) in einer Standby-Position.

15. Verfahren nach Anspruch 14, **dadurch gekennzeichnet, dass** der Reifen (100) oder die Messköpfe (42, 44) während Schritt e) um 60° oder um 90° oder um 180° gedreht werden.

**Claims**

1. An apparatus (10) for testing tires (100), in particular by means of an interferometric measuring method,

   wherein the tire (100) to be tested has a first sidewall (110), a second sidewall (120) and a tread (130),
   wherein the first sidewall (110) and/or the second sidewall (120) are subdividable into a plurality of sectors (S1.1 to S1.4; S2.1 to S2.4) to be detected,

      wherein the sectors (S1.1 to S1.4) of the first sidewall (110) are delimited by a first sector line (SL1.1-A1 to SL1.4-A1) and a second sector line (SL1.1-A2 to SL1.4-A2) and/or the sectors (S2.1 to S2.4) of the second sidewall (120) are delimited by a first sector line (SL2.1-A1 to SL2.4-A1) and a second sector line (SL2.1-A2 to SL2.4-A2),
      wherein the first sector line (SL1.1-A1 to SL1.4-A1, SL2.1-A1 to SL2.4-A1) and the second sector line (SL1.1-A2 to SL1.4-A2, SL2.1-A2 to SL2.4-A2) delimiting the respective sector (S1.1 to S1.4, S2.1 to S2.4) are at a first sector angle ($\alpha$) to one another,

   wherein the tread (130) is subdividable into a plurality of sectors (L1 to L8) to be detected,

      wherein the sectors (L1 to L8) of the tread (130) are each delimited by a first sector line (SL1-L1 to SL8-L1) and a second sector line (SL1-L2 to SL8-L2), and
      wherein the first sector line (SL1-L1 to SL8-L1) and the second sector line (SL1-L2 to SL8-L2) delimiting the respective sector (L1 to L8) are at a second sector angle ($\beta$) to one another;

   wherein the apparatus (10) comprises:

      a pressure chamber (20), in which the tire (100) to be tested can be exposed to a predetermined pressure ($\rho_{ND}$, $\rho_{PD}$);
      a base frame (30) having a surface (31) on which the tire (100) can be supported in a lying position such that the first sidewall (110) faces upwards in a first test cycle (PZ1) and, after turning the tire (100), the second sidewall (120) faces upwards in a second test cycle (PZ2);
      a measuring device (40), comprising:

         N outer measuring heads (42) configured to completely detect at least one sector (S1.1 to S1.4; S2.1 to S2.4) of the first sidewall (110) and/or the second sidewall (120) respectively,
         N inner measuring heads (44) configured to completely detect at least one sector (L1 to L8) of the tread (130) respectively, and

wherein N is a natural number; and

a rotating device (32, 46) for rotating the surface (31) of the base frame (30) on which the tire (100) lies, and/or the measuring device (40) by a predetermined rotation angle ($\varphi$-DA) about an axis of rotation (DA),

**characterised in that**

the first sector angle ($\alpha$) has the value of the formula: $\dfrac{360°}{N \cdot 2}$ and

the second sector angle ($\beta$) has the value of the formula: $\dfrac{360°}{N \cdot 4}$;

wherein the magnitude of the rotation angle ($\varphi$-DA) corresponds to the value of the first sector angle ($\alpha$).

2. The apparatus according to claim 1, **characterised in that** N is equal to 2 or 3.

3. The apparatus according to claim 1 or 2, **characterised in that** the base frame (30) comprises the rotating device (32) or **in that** the measuring device (40) comprises the rotating device (46).

4. The apparatus according to claim 3, **characterised in that** the rotating device (32, 46) is configured to rotate the tire (100) or the measuring device (40) during the first test cycle (PZ1) and/or the second test cycle (PZ2).

5. The apparatus according to any one of claims 1 to 4, **characterised in that** the inner measuring head (44) and/or the outer measuring head (42) has a detection range that is larger than the sector (S1.1 to S1.4; S2.1 to S2.4; L1 to L8) to be detected.

6. The apparatus according to any one of claims 1 to 5, **characterised in that** the first sector line (SL1.1-A1, SL2.1-A1) of the first sector (S1.1; S2.1) of the first sidewall (110) and/or the second sidewall (120) is at a line angle ($\delta$) to the first sector line (SL1-L1) of the first sector (L1) of the tread (130).

7. The apparatus according to claim 6, **characterised in that** the line angle ($\delta$) is equal to zero.

8. The apparatus according to any one of claims 1 to 7, **characterised by** a turning device (50) configured to turn the tire (100) about a turning axis (WA).

9. The apparatus according to claim 8, **characterised in that** the turning axis (WA) and the first sector line (SL1-L1) of the first sector (L1) of the tread (130) are arranged parallel to each other and in one plane, wherein the plane is defined by the sector line (SL1-L1) of the first sector (L1).

10. The apparatus according to claim 8 or 9, **characterised in that** a first alignment line (AL1) extending between two outer measuring heads (42) is at an alignment angle ($\gamma$) to a second alignment line (AL2) extending between two inner measuring heads (44);
wherein preferably the alignment angle ($\gamma$) is an acute angle, more preferably between 1 degree and 22.5 degrees.

11. The apparatus according to claim 10, **characterised in that** the alignment angle ($\gamma$) is half as large as the second sector angle ($\beta$) of the sector (L1 to L8) of the tread (130).

12. The apparatus according to any one of claims 1 to 11, **characterised in that** the number of sectors (S1.1 to S1.4) of the first sidewall (110) is equal to 4 or equal to 6 and **in that** the number of sectors (L1 to L8) of the tread (130) is equal to 8 or equal to 12 and **in that** the number of sectors (S2.1 to S2.4) of the second sidewall (120) is equal to 4 or equal to 6.

13. A method for testing tires (100) by means of a testing apparatus (10) according to any one of claims 1 to 12,

wherein the method comprises the following steps:

a) arranging the tire (100) to be tested in a lying position in the pressure chamber (20);
b) performing a first test cycle (PZ1) for detecting all sectors (S1.1 to S1.4) of the first sidewall (110) and a predetermined number of sectors (L1 to L8) of the tread (130) in a first detection range (EB1) of the tread (L1 to L8);
c) turning the tire (100); and

d) performing a second test cycle (PZ2) for detecting all sectors (S2.1 to S2.4) of the second sidewall (120) and a predetermined number of sectors (L1 to L8) of the tread (130) in a second detection range (EB2) of the tread (L1 to L8);

wherein the first detection range (EB1) and the second detection range (EB2) together comprise all sectors (L1 to L8) of the tread (130).

14. The method according to claim 13, **characterised in that** the first test cycle (PZ1) and/or the second test cycle (PZ2) comprises the following sequence of steps:

a) positioning the measuring heads (42, 44) in a testing position;
b) detecting the sectors assigned to the measuring heads (42, 44);
c) generating a testing pressure ($\rho_{PD}$) in the pressure chamber (20);
d) detecting the sectors assigned to the measuring heads (42, 44);
e) rotating the base frame (30) and/or the measuring heads (42, 44) about the axis of rotation (DA);
f) detecting the sectors assigned to the measuring heads (42, 44);
g) generating a nominal pressure ($\rho_{ND}$) in the pressure chamber (20);
h) detecting the sectors assigned to the measuring heads (42, 44); and
i) positioning the measuring heads (42, 44) in a standby position.

15. The method according to claim 14, **characterised in that** the tire (100) or the measuring heads (42, 44) are rotated by 60 degrees or by 90 degrees or by 180 degrees during step e).

**Revendications**

1. Un dispositif (10) pour le contrôle de pneumatiques (100), en particulier au moyen d'un procédé de mesure interférométrique,

dans lequel un pneumatique (100) à contrôler présente un premier flanc (110), un deuxième flanc (120) et une bande de roulement (130),
dans lequel le premier flanc (110) et/ou le deuxième flanc (120) peuvent être subdivisés en une pluralité de secteurs (S1.1 à S1.4 ; S2.1 à S2.4) à détecter,

dans lequel les secteurs (S1.1 à S1.4) du premier flanc (110) sont délimités par une première ligne de secteur (SL1.1-A1 à SL1.4-A1) et une deuxième ligne de secteur (SL1.1-A2 à SL1.4-A2) et/ou les secteurs (S2.1 à S2.4) du deuxième flanc (120) sont délimités par une première ligne de secteur (SL2.1-A1 à SL2.4-A1) et une deuxième ligne de secteur (SL2.1-A2 à SL2.4-A2),
dans lequel la première ligne de secteur (SL1.1-A1 à SL1.4-A1, SL2.1-A1 à SL2.4-A1) et la deuxième ligne de secteur (SL1.1-A2 à SL1.4-A2, SL2.1-A2 à SL2.4-A2) délimitant le secteur respectif (S1.1 à S1.4, S2.1 à S2.4) forment entre elles un angle de secteur ($\alpha$),

dans lequel la bande de roulement (130) peut être subdivisée en une pluralité de secteurs (L1 à L8) à détecter,

dans lequel les secteurs (L1 à L8) de la bande de roulement (130) sont chacun délimités par une première ligne de secteur (SL1-L1 à SL8-L1) et une deuxième ligne de secteur (SL1-L2 à SL8-L2), et
dans lequel la première ligne de secteur (SL1-L1 à SL8-L1) et la deuxième ligne de secteur (SL1-L2 à SL8-L2) délimitant le secteur respectif (L1 à L8) forment entre elles un deuxième angle de secteur ($\beta$) ;

dans lequel le dispositif (10) comprend :

une chambre de pression (20), dans laquelle le pneumatique (100) à contrôler peut être exposé à une pression prédéterminée (pND, pPD) ;
un châssis (30) présentant une surface (31) sur laquelle le pneumatique (100) peut être supporté en position couchée de telle sorte que le premier flanc (110) se trouve en haut dans un premier cycle de contrôle (PZ1) et, après retournement du pneumatique (100), le deuxième flanc (120) se trouve en haut dans un deuxième cycle de contrôle (PZ2) ;
un dispositif de mesure (40), comprenant :

N têtes de mesure extérieures (42) configurées pour détecter complètement au moins un secteur (S1.1 à S1.4 ; S2.1 à S2.4) du premier flanc (110) et/ou du deuxième flanc (120) respectivement,
N têtes de mesure intérieures (44) configurées pour détecter complètement au moins un secteur (L1 à L8) de la bande de roulement (130) respectivement, et
où N est un nombre naturel ; et
un dispositif de rotation (32, 46) pour la rotation de la surface (31) du châssis (30) sur laquelle repose le pneumatique (100), et/ou du dispositif de mesure (40) d'un angle de rotation ($\varphi$-DA) prédéterminé autour d'un axe de rotation (DA),
**caractérisé en ce que**

le premier angle de secteur ($\alpha$) a la valeur de la formule : $\dfrac{360°}{N \cdot 2}$ et

le deuxième angle de secteur ($\beta$) a la valeur de la formule : $\dfrac{360°}{N \cdot 4}$ ;

la grandeur de l'angle de rotation ($\varphi$-DA) correspondant à la valeur du premier angle de secteur ($\alpha$).

2. Le dispositif selon la revendication 1, **caractérisé en ce que** N est égal à 2 ou 3.

3. Le dispositif selon la revendication 1 ou 2, **caractérisé en ce que** le châssis (30) comporte le dispositif de rotation (32) ou **en ce que** le dispositif de mesure (40) comporte le dispositif de rotation (46).

4. Le dispositif selon la revendication 3, **caractérisé en ce que** le dispositif de rotation (32, 46) est configuré pour faire tourner le pneumatique (100) ou le dispositif de mesure (40) pendant le premier cycle de contrôle (PZ1) et/ou le deuxième cycle de contrôle (PZ2).

5. Le dispositif selon l'une quelconque des revendications 1 à 4, **caractérisé en ce que** la tête de mesure intérieure (44) et/ou la tête de mesure extérieure (42) présente une zone de détection qui est plus grande que le secteur (S1.1 à S1.4 ; S2.1 à S2.4 ; L1 à L8) à détecter.

6. Le dispositif selon l'une quelconque des revendications 1 à 5, **caractérisé en ce que** la première ligne de secteur (SL1.1-A1, SL2.1-A1) d'un premier secteur (S1.1 ; S2.1) du premier flanc (110) et/ou du deuxième flanc (120) forme un angle de ligne ($\delta$) avec la première ligne de secteur (SL1-L1) d'un premier secteur (L1) de la bande de roulement (130).

7. Le dispositif selon la revendication 6, **caractérisé en ce que** l'angle de ligne ($\delta$) est égal à zéro.

8. Le dispositif selon l'une quelconque des revendications 1 à 7, **caractérisé par** un dispositif de retournement (50) configuré pour retourner le pneumatique (100) autour d'un axe de retournement (WA).

9. Le dispositif selon la revendication 8, **caractérisé en ce que** l'axe de retournement (WA) et la première ligne de secteur (SL1-L1) du premier secteur (L1) de la bande de roulement (130) sont disposés parallèlement l'un à l'autre et dans un plan, le plan étant défini par la ligne de secteur (SL1-L1) du premier secteur (L1).

10. Le dispositif selon la revendication 8 ou 9, **caractérisé en ce qu'**une première ligne d'alignement (AL1) s'étendant entre deux têtes de mesure extérieures (42) forme un angle d'alignement ($\gamma$) avec une deuxième ligne d'alignement (AL2) s'étendant entre deux têtes de mesure intérieures (44) ;
l'angle d'alignement ($\gamma$) étant de préférence un angle aigu, plus préférentiellement compris entre 1° et 22,5°.

11. Le dispositif selon la revendication 10, **caractérisé en ce que** l'angle d'alignement ($\gamma$) est moitié moins grand que le deuxième angle de secteur ($\beta$) du secteur (L1 à L8) de la bande de roulement (130).

12. Le dispositif selon l'une quelconque des revendications 1 à 11, **caractérisé en ce que** le nombre de secteurs (S1.1 à S1.4) du premier flanc (110) est égal à 4 ou égal à 6 et **en ce que** le nombre de secteurs (L1 à L8) de la bande de roulement (130) est égal à 8 ou égal à 12 et **en ce que** le nombre de secteurs (S2.1 à S2.4) du deuxième flanc (120) est égal à 4 ou égal à 6.

13. Un procédé de contrôle de pneumatiques (100) au moyen d'un dispositif de contrôle (10) selon l'une quelconque des revendications 1 à 12,

dans lequel le procédé comprend les étapes suivantes :

a) disposer le pneumatique (100) à contrôler en position couchée dans la chambre de pression (20) ;
b) effectuer un premier cycle de contrôle (PZ1) pour la détection de tous les secteurs (S1.1 à S1.4) du premier flanc (110) et d'un nombre prédéterminé de secteurs (L1 à L8) de la bande de roulement (130) dans une première zone de détection (EB1) de la bande de roulement (L1 à L8) ;
c) retourner le pneumatique (100) ; et
d) effectuer un deuxième cycle de contrôle (PZ2) pour la détection de tous les secteurs (S2.1 à S2.4) du deuxième flanc (120) et d'un nombre prédéterminé de secteurs (L1 à L8) de la bande de roulement (130) dans une deuxième zone de détection (EB2) de la bande de roulement (L1 à L8) ;

dans lequel la première zone de détection (EB1) et la deuxième zone de détection (EB2) comprennent ensemble tous les secteurs (L1 à L8) de la bande de roulement (130).

14. Le procédé selon la revendication 13, **caractérisé en ce que** le premier cycle de contrôle (PZ1) et/ou le deuxième cycle de contrôle (PZ2) comprend la suite d'étapes suivante :

a) positionner les têtes de mesure (42, 44) dans une position de contrôle
b) détecter les secteurs attribués aux têtes de mesure (42, 44) ;
c) générer une pression de contrôle (pPD) dans la chambre de pression (20) ;
d) détecter les secteurs attribués aux têtes de mesure (42, 44) ;
e) faire tourner le châssis (30) et/ou les têtes de mesure (42, 44) autour de l'axe de rotation (DA) ;
f) détecter les secteurs attribués aux têtes de mesure (42, 44) ;
g) générer une pression nominale (pND) dans la chambre de pression (20) ;
h) détecter les secteurs attribués aux têtes de mesure (42, 44) ; et
i) positionner les têtes de mesure (42, 44) dans une position d'attente.

15. Le procédé selon la revendication 14, **caractérisé en ce que** le pneumatique (100) ou les têtes de mesure (42, 44) sont tournés de 60° ou de 90° ou de 180° pendant l'étape e).

Fig. 1

Fig. 2

Fig. 3

Fig. 4a

Fig. 4b

Fig. 5

Fig. 6a

Fig. 6b

Fig. 6c

Fig. 6d

## Fig. 6e

## Fig. 7a

## Fig. 7b

Fig. 8

10

42a

44a

Fig. 9a

10

42b

44b

44c

42c

Fig. 9b

10

42b

44b

42c

44c

Fig. 9c

Fig. 10a

Fig. 10b

Fig. 10c

Fig. 10d

Fig. 10e

Fig. 10f

Fig. 10g

Fig. 10h

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4231578 A1
- EP 1014036 B1
- EP 1959227 B1
- EP 2549258 B1
- DE 102013010402 A1
- EP 2851670 A2
- DE 102022115800 B3